# EUROPÄISCHE PATENTSCHRIFT

(11) **EP 0 922 591 B1**
(45) Veröffentlichungstag und Bekanntmachung des Hinweises auf die Patenterteilung: **12.06.2002**
(21) Anmeldenummer: 98119560.5
(22) Anmeldetag: 16.10.1998
(51) Int. Cl.: B60B 1/08, B60B 1/12, B60B 3/06, B22D 15/00

(54) **Rad für ein Kraftfahrzeug mit Hohlspeichen**
Wheel for a motor vehicle with hollow spokes
Roue à rayons creux pour un véhicule à moteur

(30) Priorität: 11.12.1997 DE 19754959
(43) Veröffentlichungstag der Anmeldung: 16.06.1999
(73) Patentinhaber: Dr.Ing. h.c.F. Porsche Aktiengesellschaft, 70435 Stuttgart (DE)
(72) Erfinder: Hummel, Frank, 72800 Eningen (DE); Stach, Jens, 71296 Heimsheim (DE)

(56) Entgegenhaltungen:
- WO-A-99/39923
- DE-A- 4 421 470
- DE-C- 3 642 978
- DE-C- 19 501 508
- US-A- 3 253 862

## Beschreibung

Die Erfindung bezieht sich auf ein Rad für ein Kraftfahrzeug mit Hohlspeichen nach dem Oberbegriff des Anspruchs 1.

Aus der DE 44 21 470 A1 ist ein gegossenes Fahrzeugrad mit Hohlspeichen bekannt, die in der Felge eine Öffnung zum Herausbringen eines Gußkerns aufweisen und der vom Gußkern befreite Raum des Rades einen zur Felge hin geöffneten Hohlraum ausbildet. Desweiteren sind aus der DE 19 501 508 Bauteile für Fahrwerke in Kraftfahrzeuge bekannt, welche aus Aluminiumdruckguß bestehen und einen Hohlraum aufweisen, in denen sich Aluminiumschaum befindet. Desweiteren ist aus der US 3,253,862 ein gattungsgemässes Fahrzeugrad mit Hohlspeichen bekannt, in denen Metallwolle als verbleibender Kern angeordnet ist. Diese Metallwolle bildet einen nicht begrenzbaren Kern, der beim Umgießen von Gußmaterial teilweise durchdrungen wird bzw. dringt Gußmaterial in die Metallwolle ein, wodurch sich Unwucht am Rad einstellt.

Aufgabe der Erfindung ist es, ein gegossenes Fahrzeugrad mit Hohlspeichen zu schaffen, das in einfacher Weise herstellbar und stabil ausgebildet ist.

Diese Aufgabe wird erfindungsgemäß durch die Merkmale der Patentansprüche 1 oder 3 gelöst. Weitere vorteilhafte Merkmale beinhalten die Unteransprüche.

Die mit der Erfindung hauptsächlich erzielten Vorteile bestehen darin, daß die Hohlräume der Radspeichen durch einen verlorenen und im Rad verbleibenden Formkern, entweder aus mindestens einem geschlossenen Schalenförmigen Hohlelement aus metallischen oder keramischen Werkstoff, einem Metallschaum oder einem keramikschaum bestehend, die Formbeständigkeit der Radspeichen unterstützen. Durch den verlorenen Kern kann eine geringere Wandstärke der Radspeichen gewählt werden, wodurch das Rad insgesamt leichter wird als ein Rad mit unausgefüllten Hohlräumen.

Der verlorene Kern ist in der Kokille über Positionierelemente, wie beispielsweise Zapfen lagegenau anzuordnen, so daß eine Formgenauigkeit wie mit einem entfernbaren Sandkern erzielbar ist. Damit eine Nacharbeit entfällt, sind die Positionierelemente aus einem Leichtmetall, wie das Rad bestehend, so daß eine innige Verbindung mit der Speichenwandung beim Gießverfahren erfolgt. Der verlorene Kern kann auch in den Bereichen zwischen den Radspeichen in der Felge angeordnet sein.

Die schalenförmigen Hohlelemente können aus Metallen, wie Leichtmetall, beispielsweise einer Aluminiumlegierung bzw. einer Stahllegierung bestehen, wobei auch andere Metalle denkbar sind, die einen Schmelzpunkt oberhalb der Gußtemperatur aufweisen.

Die Hohlelemente können auch aus mehreren Schalen zusammengesetzt sein und hydrogeformt hergestellt werden.

Der geschäumte Kern, beispielsweise aus einem Aluminium bestehend, weist eine entsprechend behandelte Außenhaut auf. Der Kern sollte ein erheblich geringere Gesamtdichte als der Gußwerkstoff aufweisen. Desweiteren soll der Kern für den Raum des Gießvorgangs beständig gegen die Temperatur der Schmelze und formbeständig für die Dauer des Gußvorgangs sein.

Die Verwendung von verlorenen Kernen ergibt unter anderem den Vorteil, daß Formsand nicht aus den Hohlräumen herausgeschüttelt werden muß.

Es sind verschiedene Abstützungen des verlorenen Kernes zum Gießen des Rades möglich. So kann der verlorene Kern in der Radnabe abgestützt sein. Desweiteren ist eine Abstützung in den Bohrungen der Radschrauben möglich. Ferner kann eine Abstützung auch durch Öffnungen in der Felge erfolgen. Der verlorene Kern ist ein zusammenhängendes Gebilde und füllt alle Hohlräume des Rades, wie die Speichen und die Ringräume aus.

Ausführungsbeispiele der Erfindung sind in den Zeichnungen dargestellt und werden im folgenden näher beschrieben.

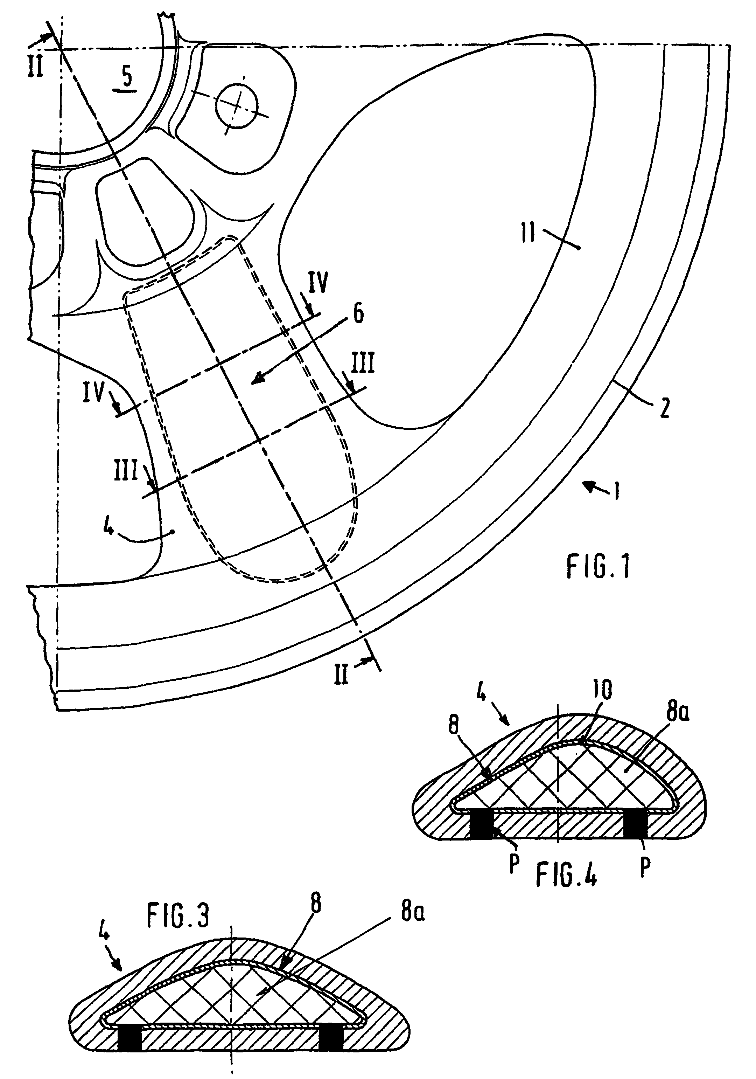

Es zeigen
- Fig. 1: eine teilweise Draufsicht auf ein Fahrzeugrad mit Hohlraum,
- Fig. 2: einen Schnitt nach der Linie II-II der Fig. 1,
- Fig. 3: einen Schnitt nach der Linie III-III der Fig. 1 mit einer Ausschäumung,
- Fig. 3a: einen Schnitt nach der Linie III-III mit einem schalenförmigen Element,
- Fig. 4: einen Schnitt nach der Linie IV-IV durch die Radspeichen mit einer Ausschäumung,
- Fig. 4a: einen Schnitt nach der Linie III-III der Fig. 1 mit einem schalenförmigen verlorenen Kern,
- Fig. 5: eine Ausführung eines Rades mit einem verlorenen Kern, der im Bereich des Radzentrums abgestützt wird,
- Fig. 6: die Ausführung gemäß Fig. 5 nach Bearbeitung und eingesetzter Zentralbuchse,
- Fig. 7: eine weitere Ausführung eines Rades mit einem verlorenen Kern der in den Bohrungen für die Radschrauben herausgeführt und abgestützt wird,
- Fig. 8: die Ausführung gemäß Fig. 7 nach Bearbeitung mit eingesetzten Buchsen und
- Fig. 9: eine weitere Ausführung eines Rades mit einem verlorenen Kern der aus Öffnungen der Speichen im Bereich der Felge herausgeführt ist und abgestützt wird.

Ein Rad 1 für ein Kraftfahrzeug umfaßt im wesentlichen eine mit einem Radstern 2 verbundene Felge 3, wobei der Radstern 2 Speichen 4 umfaßt, die sich radial zum Radzentrum 5 hin erstrecken.

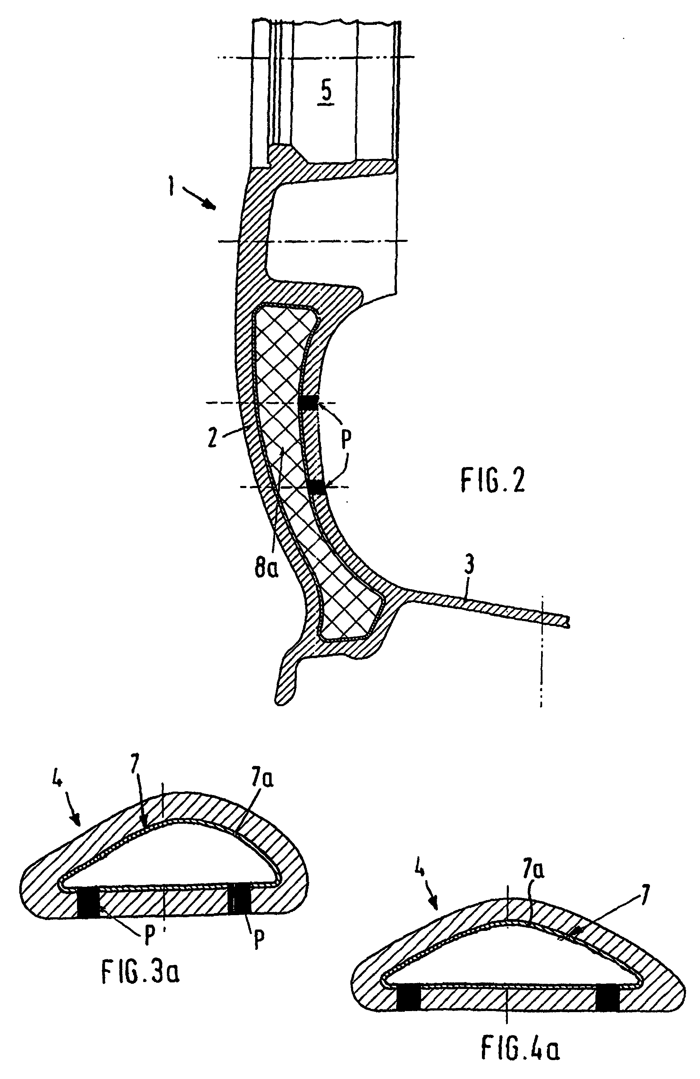

Die Radspeichen 4 weisen radiale Hohlräume 6 auf, die sich annähernd vom Radzentrum 5 bis zur Felge 3 erstrecken. Diese Hohlräume 6 werden beim Gußvorgang erzeugt, indem in die Kokille entsprechend der Anzahl der Radspeichen 4 entweder ein schalenartiges Hohlelement 7a als Kern 7 (Fig. 3a, 4a) oder ein Kern 8; 9; 13; 19 aus einem Metallschaum 8a (Fig. 3 und 4) angeordnet wird. Dieser Kern verbleibt nach dem Gießvorgang in den Speichen 4; als verlorener Kern.

Der verlorene Kern 7; 8; 9; 13, 19 weist zur lagegenauen Anordnung in der Kokille Positionierelemente P auf, die in der Wandung der Radspeichen 4 verbleiben und mit diesen innig verbunden sind.

Der Hohlraum 6 in den Radspeichen 4 ist vorzugsweise geschlossen ausgeführt, so daß der verlorene Kern 7; 8; 9; 13; 19 eine flächige innere Abstützung bewirkt.

Das schalenartige Hohlelement 7 in der Speiche 4 gemäß Fig. 3a und 4a kann aus einer Schale 7a oder aus mindestens zwei zusammengesetzten Schalen bestehen. Die Schalen 7a können beispielsweise hydrogeformt hergestellt werden.

Die Werkstoffe für die Schalen können Leichtmetalle, wie eine Aluminiumlegierung oder eine Stahllegierung sein. Denkbar wäre auch ein keramisches Element.

Der geschäumte verlorene Kern 8 in den Speichen 4 gemäß der Fig. 3 und 4 kann aus einem Aluminiumschaum 8a wie auch aus einem Keramikschaum bzw. Keramik bestehen.

Das geschäumte metallische Element 8a ist mit einer Außenhaut 10 umgeben. Der Bereich 11 zwischen den Radspeichen 4 in der Felge 3 kann ebenfalls mit einem verlorenen Kern versehen sein, so daß sich partiell Ringabschnitte ergeben.

Die Ausbildung der Radspeichen 4 ist beispielsweise in den Fig. 3, 3a, 4, 4a dargestellt. Es sind auch andere Querschnitte der Rippen, wie beispielsweise ovalförmig, polygonal, wie rechteckig, viereckig oder ähnliche geometrische Formen möglich. Ebenfalls sind im Querschnitt kreisrunde Speichenformen möglich.

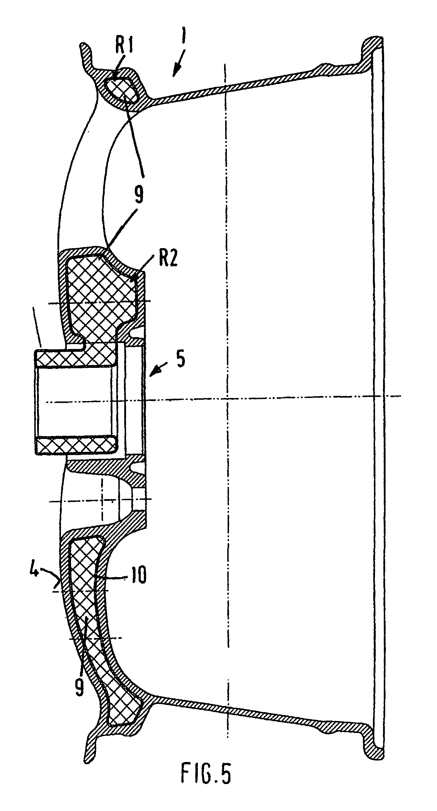

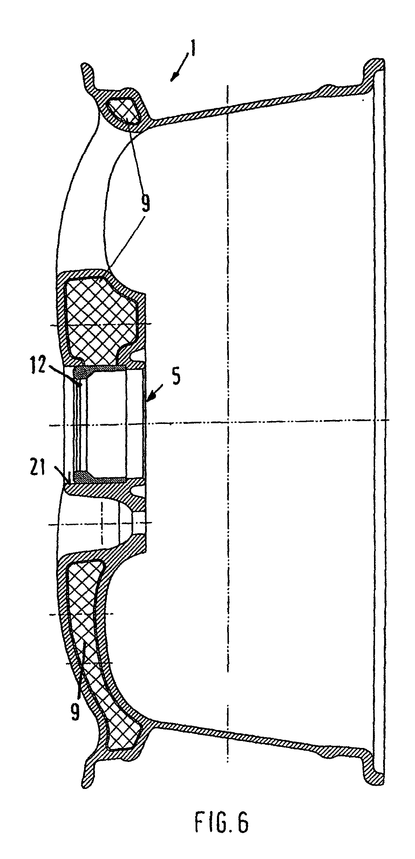

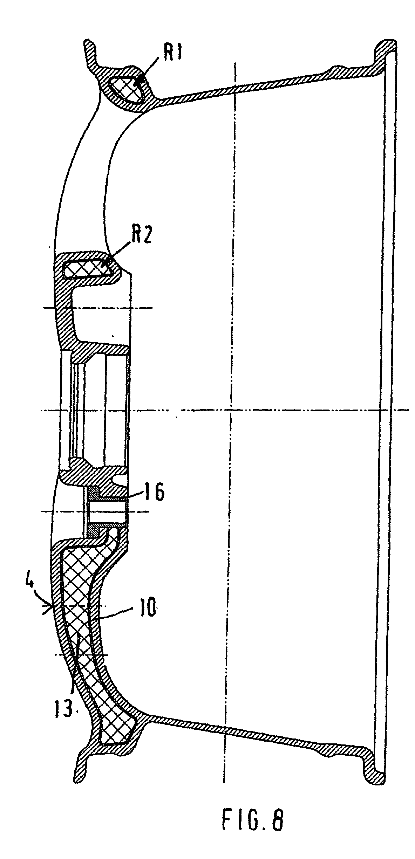

Die weiteren Ausführungen der Räder gemäß der Fig. 5 bis 9 zeigen die an verschiedenen Orten des Rades 1 positioniert abgestützten verlorenen Formkerne aus einem geschäumten Kern 9, 13 und 19, die vorstehend ausgeführt sind und dieser vorstehende Bereich in einer Kokillenform abgestützt wird.

Gemäß Fig. 5 ist der Kern 9 aus dem Radzentrum 5 herausgeführt und in der Kokillenform abgestützt. Nach einer Bearbeitung auf den Durchmesser der Bohrung 21 wird eine Zentralbuchse 12 eingepreßt. Hierdurch erfolgt zusätzlich eine Abdichtung der Hohlräume.

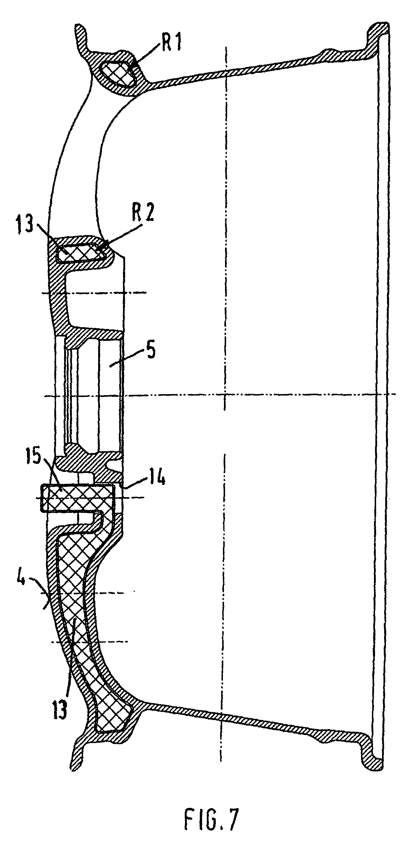

Gemäß Fig. 7 ist der Kern 13 aus den Bohrungen 16 für die Radschrauben herausgeführt und in der Kokillenform abgestützt. Nach einer Bearbeitung auf den Durchmesser der Bohrung 14 wird eine Buchse 16 eingepreßt, die dann die Radschrauben aufnimmt.

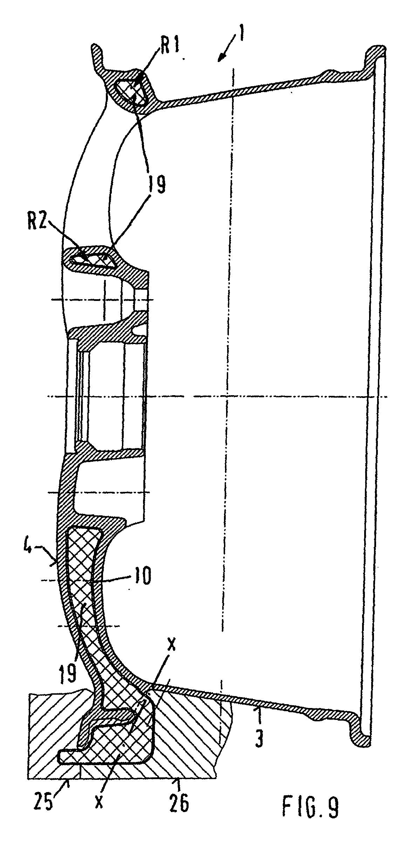

Gemäß Fig. 9 ist der verlorene Kern 19 aus Öffnungen in Hohlspeichen 4 jeweils herausgeführt und in der Kokillenform 25, 26 abgestützt. Eine Bearbeitung erfolgt entlang der Linie X-X gemäß Fig. 9.

## Patentansprüche

1. Rad für ein Kraftfahrzeug, aus einem Leichtmetall bestehend, das in einem Gußverfahren hergestellt ist und in Radspeichen Hohlräume aufweist, in denen ein verlorener Kern verbleibend angeordnet ist, **dadurch gekennzeichnet, daß** der Kern (8; 9; 13; 19) aus mindestens einem geschäumten Element (8a) aus metallischem oder keramischem Werkstoff besteht, der eine geringere Gesamtdichte als der Rad-Gußwerkstoff aufweist und eine gußbeständige, geschlossene Außenhaut (10) besitzt.

2. Rad nach Anspruch 1, **dadurch gekennzeichnet, daß** das geschäumte metallische Element (8a) aus einem Aluminiumschaum besteht.

3. Rad für ein Kraftfahrzeug mit Hohlspeichen, aus einem Leichtmetall bestehend, das in einem Gußverfahren hergestellt ist und in Radspeichen Hohlräume aufweist, in denen ein verlorener Kern verbleibend angeordnet ist, **dadurch gekennzeichnet, daß** der verlorene Kern (7) aus mindestens einem geschlossenen schalenförmigen Hohlelement (7a) aus metallischem oder keramischem Werkstoff besteht.

4. Rad nach Anspruch 4, **dadurch gekennzeichnet, daß** das geschlossene Hohlelement (7a) aus einer Aluminiumlegierung besteht.

5. Rad nach Anspruch 4, **dadurch gekennzeichnet, daß** das geschlossene Hohlelement (7a) aus einer Stahllegierung besteht.

6. Rad nach einem oder mehreren der vorhergehenden Ansprüche, **dadurch gekennzeichnet, daß** der verlorene Kern (7; 8; 13; 19) Positionierelemente (P) aufweist, die im Gießwerkzeug lagegenau gehalten sind und welche in den Wandungen der Radspeichen (4) sich mit diesen verbindend angeordnet sind.

7. Rad nach einem der vorhergehenden Ansprüche, **dadurch gekennzeichnet, daß** der verlorene Kern (9) zentrisch des Rades (1) positioniert angeordnet ist und sich von hier aus in das Radzentrum (5) sowie in die radialen Hohlräume (10) der Radspeichen (4) und in die Ringräume (R1 und R2) erstreckt.

8. Rad nach Anspruch 9, **dadurch gekennzeichnet, daß** der im Radzentrum (5) nach außen vorstehende verlorene Kern (9) mechanisch so weit bearbeitet wird, daß sich eine durchgehende Bohrung (11) zur Aufnahme einer Zentralbuchse (12) ergibt.

9. Rad nach einem der vorhergehenden Ansprüche, **dadurch gekennzeichnet, daß** der verlorene Kern (13) jeweils in Bohrungen (14) von Radschrauben positioniert angeordnet ist und sich von hier aus in die radialen Hohlräume (10) der Radspeichen (4) sowie in die Ringräume (R1 und R2) erstreckt.

10. Rad nach einem der vorhergehenden Ansprüche, **dadurch gekennzeichnet, daß** die vorstehenden Kernteile (15) in den Bohrungen (14) derart bearbeitet werden, daß sich eine durchgehende Bohrung (14) zur Aufnahme von Buchsen (16) für die Radschrauben ergeben.

11. Rad nach einem der vorhergehenden Ansprüche, **dadurch gekennzeichnet, daß** der verlorene Kern (19) jeweils in Öffnungen der Felge (17) des Rades (1) positioniert angeordnet ist und sich von hier aus in die radialen Hohlräume (10) der Radspeichen (4) sowie der Ringräume (R1 und R2) erstreckt.

12. Rad nach Anspruch 13, **dadurch gekennzeichnet, daß** der vorstehende Formkern in Richtung der Bearbeitungsebene (X-X) abgetrennt wird.

## Claims

1. A wheel for a motor vehicle, consisting of a light metal which is produced in a casting process and is provided - in wheel spokes - with cavities in which a lost core is arranged permanently. **characterized in that** the core (8; 9; 13; 19) comprises at least one foamed member (8a) of a metallic or ceramic material which has a lower overall density than the cast material of the wheel and has a casting-resistant. closed outer skin (10).

2. A wheel according to Claim 1, **characterized in that** the foamed metallic member (8a) consists of an aluminium foam.

3. A wheel for a motor vehicle with hollow spokes, consisting of a light metal which is produced in a casting process and is provided - in wheel spokes - with cavities in which a lost core is arranged permanently, **characterized in that** the lost core (7) comprises at least one closed shell-shaped hollow member (7a) of a metallic or ceramic material.

4. A wheel according to Claim 3, **characterized in that** the closed hollow member (7a) consists of an aluminium alloy.

5. A wheel according to Claim 3, **characterized in that** the closed hollow member (7a) consists of a steel alloy.

6. A wheel according to one or more of the preceding Claims, **characterized in that** the lost core (7; 8; 13; 19) comprises positioning members (**P**) which are held in the correct position in the casting tool and which are arranged in the walls of the wheel spokes (4) in a manner connected thereto.

7. A wheel according to one of the preceding Claims, **characterized in that** the lost core (9) is arranged positioned centrally in the wheel ( 1 ) and extends from there into the wheel centre (5) and into the radial cavities (10) in the wheel spokes (4) and into the annular spaces (**R1** and **R2**).

8. A wheel according to Claim 9, **characterized in that** the lost core (9) projecting outwards in the wheel centre (5) is machined mechanically to the extent that a through-bore (11) for receiving a central bush (12) is produced.

9. A wheel according to one of the preceding Claims. **characterized in that** the lost core (13) is arranged positioned in each case in bores (14) of wheel bolts and extends from there into the radial cavities (10) in the wheel spokes (4) and into the annular spaces (**R1** and **R2**).

10. A wheel according to one of the preceding Claims. **characterized in that** the projecting core parts (15) are machined in the bores (14) in such a way that a through-bore (14) for receiving bushes (16) for the wheel bolts [is] produced.

11. A wheel according to one of the preceding Claims. **characterized in that** the lost core (19) is arranged positioned in each case in openings in the rim (17) of the wheel (1) and extends from there into the radial cavities (10) in the wheel spokes (4) and in the annular spaces (**R1** and **R2**).

12. A wheel according to Claim 13, **characterized in that** the projecting mould core is cut off in the direction of the machining plane (**X-X**).

## Revendications

1. Roue pour un véhicule automobile, constituée en un alliage léger, qui est fabriquée par un procédé de fonderie et qui présente des cavités dans des rayons de roue dans lesquelles est disposé à demeure un noyau perdu, **caractérisée en ce que** le noyau (8 ; 9 ; 13 ; 19) est constitué d'au moins un élément expansé (8a) en matériau métallique ou céramique, qui présente une densité totale inférieure à la fonte de la roue, et possède une paroi extérieure (10) fermée, résistante à la coulée.

2. Roue selon la revendication 1, **caractérisée en ce que** l'élément métallique expansé (8a) est constitué d'une mousse d'aluminium.

3. Roue pour un véhicule automobile avec rayons creux, constituée en un métal léger, qui est fabriquée par un procédé de fonderie et qui présente des cavités dans des rayons de roue dans lesquelles un noyau perdu est disposé à demeure, **caractérisée en ce que** le noyau perdu (7) est constitué d'au moins un élément creux (7a) fermé en forme de coquille en matériau métallique ou céramique.

4. Roue selon la revendication 3, **caractérisée en ce que** l'élément creux fermé (7a) est constitué en un alliage d'aluminium.

5. Roue selon la revendication 4, **caractérisée en ce que** l'élément creux fermé (7a) est constitué en un alliage d'acier.

6. Roue selon une ou plusieurs des revendications précédentes, **caractérisée en ce que** le noyau perdu (7 ; 8 ; 13 ; 19) comporte des éléments de positionnement (P) qui sont maintenus dans l'outil de coulée, dans une position précise, et qui sont disposés dans les parois des rayons de roue (4), reliées à ceux-ci.

7. Roue selon l'une des revendications précédentes, **caractérisée en ce que** le noyau perdu (9) est positionné au centre de la roue (1) et s'étend, à partir d'ici, dans le centre (5) de la roue ainsi que dans les cavités radiales (10) des rayons de roue (4) et dans les espaces annulaires (R1 et R2).

8. Roue selon la revendication 9, **caractérisée en ce que** le noyau perdu (9), dépassant vers l'extérieur dans le centre (5) de la roue, est usiné mécaniquement jusqu'à obtenir un trou traversant (11) destiné à recevoir une douille centrale (12).

9. Roue selon l'une des revendications précédentes, **caractérisée en ce que** le noyau perdu (13) est positionné dans des trous (14) de vis de roue et s'étend, à partir d'ici, dans les cavités radiales (10) des rayons de roue (4) ainsi que dans les espaces annulaires (R1 et R2).

10. Roue selon l'une des revendications précédentes, **caractérisée en ce que** les parties de noyau (15) dépassantes sont usinées dans les trous (14) de manière à obtenir un trou traversant (14) destiné à recevoir des douilles (16) pour les vis de roue.

11. Roue selon l'une des revendications précédentes, **caractérisée en ce que** le noyau perdu (19) est positionné dans des ouvertures respectives de la jante (17) de la roue (1), et s'étend, à partir d'ici, dans les cavités radiales (10) des rayons de roue (4) ainsi que dans les espaces annulaires (R1 et R2).

12. Roue selon la revendication 13, **caractérisée en ce que** le noyau de moulage dépassant est sectionné en direction du plan d'usinage (X-X).
